# DEMANDE DE BREVET EUROPEEN

(11) **EP 2 282 082 A1**
(43) Date de publication de la demande: **09.02.2011**
(21) Numéro de dépôt: 10170285.0
(22) Date de dépôt: 21.07.2010
(51) Int. Cl.: F16H 57/04, B61C 9/10, F16C 33/66, F16N 31/02

(54) **Dispositif de transmission de couple comprenant un racleur d'huile**

(30) Priorité: 04.08.2009 FR 0955494
(71) Demandeur: ALSTOM Transport SA, 92300 Levallois-Perret (FR)
(72) Inventeur: Leger, Alexandre, 71300, Gourdon (FR)

(57) **Abrégé**

La présente invention porte sur un dispositif de transmission de couple (1) comprenant un carter (2) à l'intérieur duquel une roue dentée (22) est montée mobile au moyen d'au moins un palier de roulements (12) logé dans une paroi latérale (6) du carter, le fond du carter étant conformé pour constituer une réserve d'huile dans laquelle une partie de la roue (22) est destinée à être immergée, le carter (2) comprenant de plus un racleur d'huile (28) disposé dans la paroi latérale (6) recevant le palier de roulements (12), au-dessus de ce dernier. Le racleur d'huile (28) comporte des moyens de fixation (54, 60) au carter amovibles, ces moyens de fixation étant accessibles depuis l'extérieur du carter (2).

## Description

L'invention concerne la lubrification de paliers de roulements utilisé dans les dispositifs de transmission de couple, et concerne notamment les dispositifs de transmission de couple employés dans des applications nécessitant la transmission de très forts couples. De tels dispositifs de transmission de couple sont utilisés par exemple dans les véhicules ferroviaires pour transmettre le couple entre un moteur du véhicule et un essieu. Ils sont appelés communément « réducteurs ».

La lubrification des paliers de roulement de tels réducteurs est en général assurée par « barattage » ou « barbotage ». Le fond du réducteur est empli d'huile de manière à former une réserve d'huile qui recouvre constamment quelques dents de la roue dentée du réducteur. Lorsque la roue dentée est en rotation, l'huile entraînée par les dents est projetée sur les parois du carter et retombe par gravité dans des goulottes pratiquées dans les faces internes des parois, qui débouchent sur les roulements. L'huile traverse les bagues de roulement du palier et retombe dans la réserve d'huile au fond du carter.

Lorsque après une période d'arrêt assez longue, le moteur du véhicule est démarré, les paliers de roulement de tels réducteurs peuvent être insuffisamment lubrifiés dès le premier tour. Cela est particulièrement critique dans le cas où la température ambiante est très basse, car l'huile est alors très visqueuse et n'est pas projetée immédiatement sur les parois du carter. De plus les longueurs des canalisations amenant l'huile aux roulements étant parfois importantes, le temps durant lequel les roulements ne sont pas à leur plein niveau de lubrification peu être long à basse température : avant que le régime permanent ne s'installe, les roulements peuvent s'échauffer rapidement et conduire à un blocage.

Il est connu du document JP 59208268 un réducteur différentiel comprenant un carter à l'intérieur duquel une roue dentée est montée mobile au moyen d'au moins un palier de roulements logé dans une paroi latérale du carter, le fond du carter étant conformé pour constituer une réserve d'huile dans laquelle une partie de la roue est immergée. Un dispositif de récupération d'huile est disposé dans la paroi latérale recevant le palier de roulement, au-dessus de la bague extérieure du palier de roulement, et agencé de manière à coopérer avec la jante de la roue dentée.

Ce dispositif de récupération d'huile est en forme d'entonnoir dont une partie est boulonnée dans la face interne de la paroi latérale. L'huile projetée lors de la rotation de la roue est recueillie à l'intérieur de cet entonnoir et est dirigée par un embout vers les roulements.

Ce dispositif de récupération d'huile n'est cependant pas en contact direct avec la jante de la roue dentée. Lors de la mise en rotation de la roue dentée et en cas de température basse, l'huile est trop visqueuse pour être projetée dans l'entonnoir et ne peut donc efficacement lubrifier les roulements.

Le dispositif de la présente invention vise à résoudre les problèmes des dispositifs de l'art antérieur. Il vise notamment à amorcer la lubrification des paliers de roulement à basse température et/ou a augmenter cette lubrification lors des périodes de fonctionnement à très basse vitesse.

Conformément à l'invention, le dispositif de transmission de couple selon l'invention comprend un carter à l'intérieur duquel une roue dentée est montée mobile au moyen d'au moins un palier de roulements logé dans une paroi latérale du carter. Le fond du carter est conformé pour constituer une réserve d'huile dans laquelle une partie de la roue est destinée à être immergée. Le carter comprend de plus un racleur d'huile disposé dans la paroi latérale recevant le palier de roulements, au-dessus de ce dernier. Le racleur d'huile selon l'invention comporte des moyens de fixation au carter amovibles, ces moyens de fixation étant accessibles depuis l'extérieur du carter.

L'invention est avantageuse à plusieurs titres : le racleur d'huile permet efficacement d'amorcer la lubrification à basse température, bien avant qu'elle ne démarre naturellement avec la réserve d'huile. En outre, le fait que ce racleur soit aisément amovible permet de standardiser le dispositif de transmission : on lui adjoint simplement le racleur quand cela est nécessaire, notamment quand le climat est froid, et on le retire, ou on ne le prévoit pas quand le climat , plus tempéré, ne requiert pas un tel amorçage, tous les autres composants du dispositif étant les mêmes.

Le dispositif de transmission de couple de l'invention peut également satisfaire à l'une des variantes suivantes:

Le racleur d'huile peut comprendre un corps sensiblement torique logé dans la paroi latérale, dont une première extrémité débouche hors du carter et une seconde extrémité débouche à l'intérieur du carter, la seconde extrémité comportant une lame s'étendant sensiblement dans la direction verticale, la lame présentant à son extrémité libre une surface coopérant avec la périphérie latérale des pignons de la roue dentée.

Le corps sensiblement torique peut comporter à la première extrémité une cavité recevant un ressort,

L'extrémité libre de la lame peut présenter une section sensiblement convexe.

Le racleur comporte une bague circulaire disposée sur la lame.

Les moyens de fixation amovibles peuvent comprendre une platine fixée à la première extrémité du racleur, la platine comprenant sur son pourtour périphérique une première série d'alésages complémentaires avec une deuxième série d'alésages formés sur la face extérieure de la paroi latérale du carter recevant le racleur, et des éléments de fixation amovibles disposés au travers des alésages de la platine et du carter.

La platine est , par exemple, en appui contre le ressort.

La face intérieure de la paroi latérale recevant le racleur peut comprendre au moins une goulotte disposée entre le racleur d'huile et le palier de roulements, la goulotte débouchant sur l'élément de roulement.

Une portion de la paroi latérale peut comporter un conduit partant du roulement et débouchant dans le fond du carter.

Le fond du carter peut comporter une saillie s'étendant sensiblement dans la direction verticale parallèlement à la paroi latérale et divisant le fond en deux bacs d'huile, au moins un orifice dans la saillie permettant l'écoulement de l'huile entre les deux bacs. Il est également possible de prévoir plusieurs saillies munies chacune d'au moins un orifice, et délimitant plus de deux bacs.

De préférence, le racleur d'huile comprend un corps muni à l'une de ses extrémités d'une lame dont l'extrémité libre s'étend selon une direction perpendiculaire à l'axe de rotation dudit dispositif et coopérant avec la périphérie latérale des pignons de la roue dentée.

Cette lame peut être solidarisée au corps par différents moyens de fixation, de type mécanique ou par collage par exemple. On peut aussi concevoir une lame qui soit intégrée au corps, qui en fasse partie.

Avantageusement, cette lame est substantiellement symétrique par rapport à un plan perpendiculaire au plan contenu dans la roue dentée. Avec cette caractéristique, le racleur selon l'invention peut fonctionner quel que soit le sens de rotation de la roue dentée, ce qui est particulièrement utile quand le dispositif de l'invention équipe un véhicule ferroviaire amené à changer de sens de circulation sur la voie.

L'invention concerne aussi un racleur fonctionnant dans les deux sens grâce à ce type de lame, que ses moyens de fixation au carter soient accessibles depuis l'extérieur du carter ou non.

D'autres buts, caractéristiques et avantages de l'invention apparaîtront à la lecture de la description des modes de réalisation du dispositif de transmission de couple, description faite en liaison avec les figures dans lesquelles:
- la figure 1 est une vue en coupe du dispositif de transmission de couple comprenant un racleur d'huile conforme à un premier mode de réalisation selon l'invention,
- la figure 2 représente une vue en coupe du racleur d'huile du dispositif selon la figure 1,
- la figure 3 représente une vue en perspective d'un racleur d'huile selon un second mode de réalisation de l'invention.

Pour faciliter la lecture des dessins, seuls les éléments nécessaires à la compréhension de l'invention ont été représentés. Les mêmes éléments portent les mêmes références d'un dessin à l'autre.

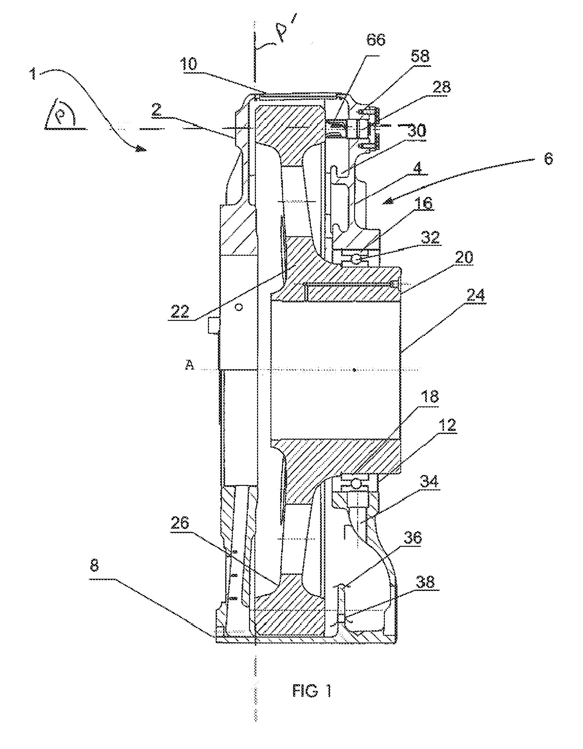

On comprend dans tout le présent texte par « vertical », « horizontal » ou tout autre qualificatif analogue comme une indication de positionnement spatial du composant en question, dans la configuration la plus habituelle ((mais pas nécessairement exclusive) de fonctionnement du dispositif de transmission de couple cette configuration correspondant à la représentation de la figure 1.

Le dispositif de transmission de couple 1 illustré à la figure 1 est par exemple un réducteur pour locomotive. Ce réducteur 1 comprend un carter 2 formé de deux demi-parties, une partie supérieure 4 et une partie inférieure 8, et d'un capot 10. Une fois fermé, le carter 2 présente deux parois latérales s'étendant dans une direction sensiblement verticale. La paroi latérale 6 tournée du côté du moteur (non représenté sur la figure) comprend un palier de roulements 12, par exemple à billes ou à rouleaux. La bague extérieure 16 du palier de roulements 12 est solidaire de la paroi latérale 6, tandis que la bague intérieure 18 du palier de roulements est solidaire du moyeu 20 d'une roue dentée 22. La roue dentée 22 est entraînée en rotation par une extrémité d'un arbre moteur 24 muni d'un pignon. La partie inférieure 8 du carter est emplie d'huile de manière à former une réserve d'huile, dans laquelle une partie d'au moins un pignon 26 de la roue dentée 22 baigne.

La paroi latérale 6 logeant le palier de roulements 12 comporte un racleur d'huile 28. Celui-ci est disposé dans la partie supérieure 4, entre le capot 10 et la bague extérieure 16 du palier de roulements 12, de manière à être en vis-à-vis de la périphérie des pignons 26 de la roue dentée. Entre le racleur 28 et la bague extérieure 16, au moins une goulotte 30 est pratiquée sur la face intérieure 31 de la paroi latérale 6, la goulotte 30 débouchant sur l'élément de roulement 32 (bille ou rouleau). Sous la bague extérieure 16, la paroi latérale 6 comporte un conduit 34 partant du roulement 32 et débouchant à l'intérieur de la partie inférieure 8. Le fond de la partie inférieure 8 comporte optionnellement une saillie 36 s'étendant sensiblement dans la direction verticale parallèlement à la paroi latérale 6 et divisant le fond en deux bacs d'huile, formant réserve. Un ou deux orifices 38 sont créés dans la saillie 36 afin de permettre l'écoulement entre cette réserve et la partie brassée par la roue dentée. Le choix du diamètre de ces ouvertures permet de paramétrer l'écoulement.

Comme illustré en figures 1 à 3, le racleur 28 comporte un corps 40 sensiblement torique, dont l'axe de révolution est parallèle à l'axe de rotation A de la roue dentée 22, et logé dans la paroi latérale 6. Une première extrémité 42 du corps débouche hors du carter 2 et une seconde extrémité 44 débouche à l'intérieur du carter 2.

Le corps 40 sensiblement torique du racleur comporte à sa première extrémité 42 une cavité 46 recevant un ressort 48. Le corps 40 du racleur comporte également une gorge annulaire 50 dans laquelle un joint torique 52 est monté, afin d'assurer l'étanchéité du carter 2. Une platine 54 de forme sensiblement circulaire est fixée à la première extrémité 42 du racleur débouchant hors du carter 2. La platine 54 est ainsi en appui contre le ressort 48 et le met en compression. L'extrémité 42 du racleur et la platine 54 comprennent des moyens de fixation de l'un à l'autre amovibles, par exemple formés d'encoches sur le corps du racleur et d'ergots appariés sur la platine. D'autres moyens de fixation peuvent être envisagés comme un système d'alésages appariés sur le corps du racleur et la platine. La platine 54 comprend sur son pourtour périphérique une série d'alésages 56. La face extérieure de la paroi latérale du carter recevant le racleur comprend également une série d'alésages 58 identiques, qui sont donc complémentaires lorsque les alésages 56 de la platine sont disposés en vis-à-vis des alésages 58 du carter. Des éléments de fixation 60 amovibles comme des vis sont disposés au travers des alésages co-axiaux 58, 56 de la platine et du carter afin de solidariser le racleur 28 au carter 2, via la platine 54. Ces éléments de fixation 60 sont accessibles depuis l'extérieur du carter.

La seconde extrémité 44 du corps du racleur, débouchant à l'intérieur du carter 2, comporte une lame 62 s'étendant sensiblement dans une direction D verticale, qui est perpendiculaire à l'axe A de rotation de la roue dentée qui, lui, est ici horizontal. Cette lame présente à son extrémité libre 64 une surface coopérant avec la périphérie latérale des pignons 26 de la roue dentée 22 située en vis-à-vis de la paroi latérale 6. L'extrémité libre 64 de la lame présente, dans un plan horizontal sensiblement parallèle au fond du carter, une section sensiblement convexe. La lame comporte sur ses faces verticales une gorge 66 de forme convexe, sensiblement horizontale près de la surface de contact 64 et sensiblement verticale près des flancs de l'extrémité 44, afin de diriger l'huile raclée depuis la roue 22 jusque dans la goulotte 30. La lame présente une symétrie par rapport au plan P perpendiculaire au plan P' contenant la roue dentée (passant ici par sa face avant), ce qui lui permet de remplir sa fonction quel que soit le sens de rotation de la roue par rapport à son axe A.

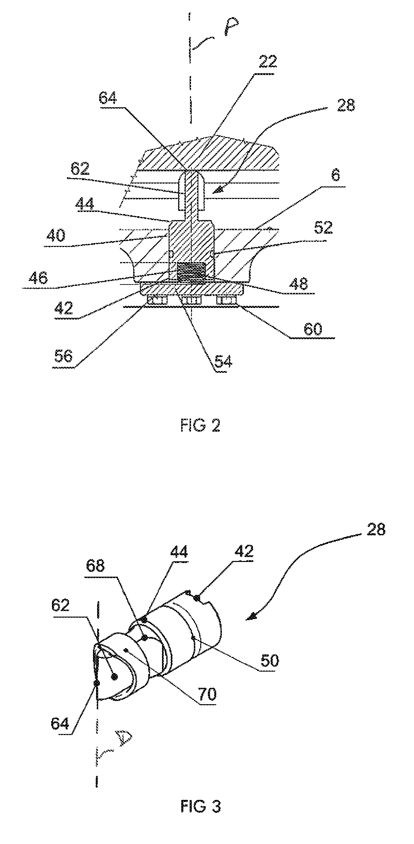

Dans une variante représentée en figure 3, la lame 62 ne comporte pas de gorge 66. La lame est liée au corps 40 par deux flancs de raccord 68 de section sensiblement concave. Le racleur 28 comporte de plus une bague circulaire 70 disposée sur la lame 62 de manière à ne toucher ni la roue dentée 22 ni le corps du racleur 40.

Le fonctionnement du dispositif de transmission de couple va maintenant être décrit. A l'arrêt, au moins un pignon 26 de la roue dentée 22 est immergé - ou partiellement immergé selon le niveau d'huile - dans la réserve d'huile. L'extrémité 64 de la lame 62 du racleur 28 est maintenue en appui contre la roue 22 par la contrainte de compression qu'exerce la platine 54 sur le ressort 48. Lorsque le moteur démarre, l'arbre moteur 24 entraîne en rotation la roue dentée 22. Dès le premier tour de roue, l'extrémité 64 de la lame frotte sur la périphérie de la roue dentée 26 chargée d'huile. Grâce à la gorge 66 de la lame 62 - ou grâce à la forme de la lame 62 et à la bague circulaire 70 qui fait office de moyen de canalisation pour la seconde variante -, l'huile raclée est dirigée vers la goulotte 30 disposée sous le racleur, où elle y tombe par gravité. Par gravité toujours, l'huile traverse les éléments de roulement 32 et rejoint le fond du carter par le conduit 34 aménagé dans la paroi latérale 6. La saillie 36 est disposée de manière à créer un bac indépendant de la réserve d'huile dans laquelle baigne une partie de la roue dentée 22. En régime permanent l'huile, dont la température a augmenté, est dirigée vers la goulotte 30 par le racleur 28 et est également projetée sur les parois latérales du carter 2 par barattage.

Un tel dispositif permet par grand froid, dès le premier tour de roue et même à des vitesses très faibles (typiquement inférieures à 10km/h) de remplir la goulotte 30 et de lubrifier efficacement les éléments de roulement 32.

Le ressort 48 logé dans le racleur 28 permet de toujours mettre en contact le racleur 28 avec la roue dentée 22, même en cas de défauts géométriques de la roue ou d'usure des parties en contact. L'effort généré par le ressort est calculé pour éviter une usure prématurée du racleur.

Le racleur 28 ou l'un de ces composants peut être facilement changé ou faire l'objet d'une maintenance en démontant les éléments de fixation 60 accessibles depuis l'extérieur du carter 2, sans qu'il soit nécessaire d'ouvrir le carter 2 du dispositif de transmission de couple.

Le dispositif de transmission de couple 1 selon l'invention est de conception simple, peut être facilement maintenu et assure la lubrification des roulements même quand l'huile est visqueuse, dès le premier tour de roue. Le dispositif reste efficace aux très basses vitesses et devient inutile à de plus hautes vitesses, sans perturber la lubrification par barbotage.

Bien entendu, l'invention n'est nullement limitée aux modes de réalisation décrits et illustrés, qui n'ont été donnés qu'à titre d'exemples.

## Revendications

1. Dispositif de transmission de couple (1) comprenant un carter (2) à l'intérieur duquel une roue dentée (22) est montée mobile autour d'un axe de rotation (A) au moyen d'au moins un palier de roulements (12) logé dans une paroi latérale (6) du carter, le fond du carter étant conformé pour constituer une réserve d'huile dans laquelle une partie de la roue (22) est destinée à être immergée, le carter (2) comprenant de plus un racleur d'huile (28) disposé dans la paroi latérale (6) recevant le palier de roulements (12), au-dessus de ce dernier, **caractérisé en ce que** le racleur d'huile (28) comporte des moyens de fixation (54, 60) au carter amovibles, ces moyens de fixation étant accessibles depuis l'extérieur du carter (2).

2. Dispositif de transmission de couple (1) selon la revendication précédente, **caractérisé en ce que** le racleur d'huile (28) comprend un corps (40) muni à l'une de ses extrémités d'une lame (62) dont l'extrémité libre s'étend selon une direction (D) perpendiculaire à l'axe de rotation (A) dudit dispositif et coopérant avec la périphérie latérale des pignons (26) de la roue dentée (22).

3. Dispositif de transmission de couple (1) selon la revendication précédente, **caractérisé en ce que** la lame (62) est substantiellement symétrique par rapport à un plan (P) perpendiculaire au plan (P') contenu dans la roue dentée (22).

4. Dispositif de transmission de couple (1) selon l'une des revendications précédentes, **caractérisé en ce que** le racleur d'huile (28) comprend un corps (40) sensiblement torique logé dans la paroi latérale (6), dont une première extrémité (42) débouche hors du carter (2) et une seconde extrémité (44) débouche à l'intérieur du carter, la seconde extrémité (44) comportant une lame (62) s'étendant sensiblement dans la direction verticale, la lame présentant à son extrémité libre (64) une surface coopérant avec la périphérie latérale des pignons (26) de la roue dentée (22).

5. Dispositif de transmission de couple (1) selon l'une des revendications précédentes, **caractérisé en ce que** le racleur d'huile (28) comprend un corps (40), notamment sensiblement torique, comportant à l'une ses extrémités (42) débouchant hors du carter (2) une cavité (46) recevant un ressort (48).

6. Dispositif de transmission de couple (1) selon l'une des revendications 2 à 4, **caractérisé en ce que** l'extrémité libre (64) de la lame (62) présente une section sensiblement convexe.

7. Dispositif de transmission de couple (1) selon l'une des revendications précédentes, **caractérisé en ce que** le racleur (28) comporte une bague circulaire (70) disposée sur la lame (62).

8. Dispositif de transmission de couple (1) selon l'une des revendications précédentes, **caractérisé en ce que** les moyens de fixation amovibles (54, 60) comprennent une platine (54) fixée à une première extrémité (42) du racleur (28) débouchant hors du carter (2), la platine (54) comprenant sur son pourtour périphérique une première série d'alésages (56) complémentaires avec une deuxième série d'alésages (58) formés sur la face extérieure de la paroi latérale (6) du carter recevant le racleur, et des éléments de fixation amovibles (60) disposés au travers des alésages (56, 58) de la platine et du carter.

9. Dispositif de transmission de couple (1) selon les revendications 5 et 8, **caractérisé en ce que** la platine (54) est en appui contre le ressort (48).

10. Dispositif de transmission de couple (1) selon l'une des revendications précédentes, **caractérisé en ce que** la face intérieure (31) de la paroi latérale (6) recevant le racleur comprend au moins une goulotte (30) disposée entre le racleur d'huile (28) et le palier de roulements (12), la goulotte (30) débouchant sur l'élément de roulement (32).

11. Dispositif de transmission de couple (1) selon l'une des revendications précédentes, **caractérisé en ce qu'**une portion de la paroi latérale (6) comporte un conduit (34) partant du roulement (32) et débouchant dans le fond du carter.

12. Dispositif de transmission de couple (1) selon l'une des revendications précédentes, **caractérisé en ce que** le fond du carter (2) comporte une saillie (36) s'étendant sensiblement dans la direction verticale parallèlement à la paroi latérale (6) et divisant le fond en deux bacs d'huile, au moins un orifice (38) dans la saillie permettant l'écoulement de l'huile entre les deux bacs.
